# EUROPEAN PATENT APPLICATION

(11) **EP 4 482 246 A1**
(43) Date of publication of application: **25.12.2024**
(21) Application number: 22925450.3
(22) Date of filing: 14.02.2022
(51) Int. Cl.: H04W 74/08, H04W 72/04

(54) **METHOD AND APPARATUS FOR DETERMINING RESOURCE POSITION OF CHANNEL, COMMUNICATION DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Stöckeler, Ferdinand
(86) International application number: PCT/CN2022/076237
(87) International publication number: WO 2023/151088

(57) **Abstract**

Embodiments of the present disclosure provide a method for determining a resource position of a channel. The method is executed by a first-type terminal, and comprises: according to configuration information of an initial uplink bandwidth part (BWP), determining a resource position of a physical layer channel used by a first-type terminal, wherein the initial uplink BWP comprises a first initial uplink BWP and/or a second initial uplink BWP, and the configuration information indicates whether a mapping relationship between the second initial uplink BWP and/or the physical layer channel and the initial uplink BWP is configured.

## Description

### TECHNICAL FIELD

The disclosure relates to the field of wireless communication technologies, more particularly, to a method and an apparatus for determining a resource position of a channel, a communication device and a storage medium.

### BACKGROUND

During continuous evolution of the network, a new terminal type, i.e., a reduced capability (Redcap) terminal, is introduced. This type of terminal is different from common terminals, for example, different from an enhanced mobile broadband (eMBB) terminal. This type of terminal may generally meet following requirements: 1. a low cost and a low complexity; 2. an enhanced coverage to a certain extent; and 3. power saving.

In the related art, a bandwidth part (BWP) is defined. With the introduction of the Redcap terminal, it is a problem to be considered how to use the BWP for the Redcap terminal.

### SUMMARY

Embodiments of the disclosure provide a method and an apparatus for determining a resource position of a channel, a communication device, and a storage medium.

According to a first aspect of embodiments of the disclosure, there is provided a method for determining a resource position of a channel. The method is performed by a first type of terminal, and includes:
determining, based on configuration information of an initial uplink bandwidth part (BWP), a resource position of a physical layer channel used by the first type of terminal.

The initial uplink BWP includes a first initial uplink BWP and/or a second initial uplink BWP, and the configuration information indicates whether the second initial uplink BWP is configured and/or a mapping relationship between the physical layer channel and the initial uplink BWP.

In an embodiment,
the first initial uplink BWP is a BWP for a second type of terminal to use, or the first initial uplink BWP is a BWP for the first type of terminal and the second type of terminal to use.

The second initial uplink BWP is a BWP for the first type of terminal to use.

In an embodiment, the physical layer channel includes one or more of:
a physical random access channel (PRACH) a physical uplink shared channel (PUSCH) or a physical uplink control channel (PUCCH).

In an embodiment, determining the resource position of the physical layer channel used by the first type of terminal based on the configuration information of the initial uplink BWP includes:
in response to the configuration information indicating that a network is configured with the first initial uplink BWP and the second initial uplink BWP, determining that the resource position of the physical layer channel used by the first type of terminal is within the second initial uplink BWP;
   or
in response to the configuration information indicating that the network is configured with the first initial uplink BWP and the second initial uplink BWP, determining that the resource position of the physical layer channel used by the first type of terminal is within the first initial uplink BWP;
   or
in response to the configuration information indicating that the network is configured with the first initial uplink BWP and the second initial uplink BWP, determining that the resource position of the physical layer channel used by the first type of terminal is within the first initial uplink BWP and the second initial uplink BWP.

In an embodiment, in response to the configuration information indicating that the network is configured with the first initial uplink BWP and the second initial uplink BWP, determining that the resource position of the physical layer channel used by the first type of terminal is within the second initial uplink BWP includes:
determining that the resource position of the physical layer channel used by the first type of terminal is within the second initial uplink BWP in response to the configuration information indicating that the network is configured with the first initial uplink BWP and the second initial uplink BWP, and the configuration information indicating that the resource position of the physical layer channel is within the first initial uplink BWP and the second initial uplink BWP.

In an embodiment, in response to the configuration information indicating that the network is configured with the first initial uplink BWP and the second initial uplink BWP, determining that the resource position of the physical layer channel used by the first type of terminal is within the first initial uplink BWP includes:
determining that the resource position of the physical layer channel used by the first type of terminal is within the first initial uplink BWP in response to the configuration information indicating that the network is configured with the first initial uplink BWP and the second initial uplink BWP, and the configuration information indicating that the resource position of the physical layer channel is within the first initial uplink BWP and not within the second initial uplink BWP.

In an embodiment, the method includes:
monitoring the second initial uplink BWP in response to determining that the resource position of the physical layer channel used by the first type of terminal is within the first initial uplink BWP and that the first type of terminal performs random access;
   or
monitoring the first initial uplink BWP in response to determining that the resource position of the physical layer channel used by the first type of terminal is within the first initial uplink BWP and that the first type of terminal performs random access;
   or,
monitoring the first initial uplink BWP and the second initial uplink BWP in response to determining that resource position of the physical layer channel used by the first type of terminal is within the first initial uplink BWP and the second initial uplink BWP and that the first type of terminal performs random access.

In an embodiment, in response to the configuration information indicating that the resource position of the physical layer channel used by the first type of terminal is within the first initial uplink BWP and the second initial uplink BWP, the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; or
total frequency resources occupied by the first initial uplink BWP and the second initial uplink BWP being within a bandwidth range supported by the first type of terminal.

In an embodiment, the method further includes:
receiving the configuration information sent by a base station.

According to a second aspect of embodiments of the disclosure, there is provided a method for determining a resource position of a channel. The method is performed by a base station, and includes:
sending configuration information of an initial uplink bandwidth part (BWP) to a first type of terminal.

The initial uplink BWP includes a first initial uplink BWP and/or a second initial uplink BWP; and the configuration information indicates whether the second initial uplink BWP is configured and/or a mapping relationship between the physical layer channel and the initial uplink BWP.

In an embodiment,
the first initial uplink BWP is a BWP for a second type of terminal to use, or the first initial uplink BWP is a BWP for the first type of terminal and the second type of terminal to use.

The second initial uplink BWP is a BWP for the first type of terminal to use.

In an embodiment, the physical layer channel includes one or more of:
a physical random access channel (PRACH) a physical uplink shared channel (PUSCH) and a physical uplink control channel (PUCCH).

In an embodiment, the configuration information indicates that a network is configured with the first initial uplink BWP and the second initial uplink BWP.

In an embodiment, the configuration information indicates that the network is configured with the first initial uplink BWP and the second initial uplink BWP, and the configuration information indicates that the resource position of the physical layer channel is within the first initial uplink BWP and the second initial uplink BWP.

In an embodiment, the configuration information indicates that the network is configured with the first initial uplink BWP and the second initial uplink BWP, and the configuration information indicates that the resource position of the physical layer channel is within the first initial uplink BWP and not within the second initial uplink BWP.

In an embodiment, the configuration information indicates that the resource position of the physical layer channel used by the first type of terminal is within the first initial uplink BWP and the second initial uplink BWP, and the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; or
total frequency resources occupied by the first initial uplink BWP and the second initial uplink BWP being within a bandwidth range supported by the first type of terminal.

According to a third aspect of embodiments of the disclosure, there is provided an apparatus for determining a resource position of a channel. The apparatus includes:
a determining module, configured to determine, based on configuration information of an initial uplink bandwidth part (BWP), a resource position of a physical layer channel used by a first type of terminal.

The initial uplink BWP includes a first initial uplink BWP and/or a second initial uplink BWP; and the configuration information indicates whether the second initial uplink BWP is configured and/or a mapping relationship between the physical layer channel and the initial uplink BWP.

According to a fourth aspect of embodiments of the disclosure, there is provided an apparatus for determining a resource position of a channel. The apparatus includes:
a sending module, configured to send configuration information of an initial uplink bandwidth part (BWP) to a first type of terminal.

The initial uplink BWP includes a first initial uplink BWP and/or a second initial uplink BWP; and the configuration information indicates whether the second initial uplink BWP is configured and/or a mapping relationship between the physical layer channel and the initial uplink BWP.

According to a fifth aspect of embodiments of the disclosure, there is provided a communication device. The communication device includes:
a processor; and
a memory, configured to store instructions executable by the processor.

The processor is configured to operate the instructions to implement the method according to any embodiment of the disclosure.

According to a sixth aspect of embodiments of the disclosure, there is provided a computer storage medium having a computer executable program stored thereon. When the computer executable program is executed by a processor, the method according to any embodiment of the disclosure is performed.

In embodiments of the disclosure, the resource position of the physical layer channel used by the terminal is determined based on the configuration information of the initial uplink bandwidth part BWP. The initial uplink BWP includes the first initial uplink BWP and/or the second initial uplink BWP. The configuration information indicates whether the second initial uplink BWP is configured and/or the mapping relationship between the physical layer channel and the initial uplink BWP. Here, the configuration information indicates whether the second initial uplink BWP is configured and/or the mapping relationship between the physical layer channel and the initial uplink BWP, thus the terminal may determine the initial uplink BWP where the resource of the physical layer channel is located based on the configuration information, and perform monitoring on the initial uplink BWP where the resource of the physical layer channel is located. Compared with a condition where the initial uplink BWP where the resource of the physical layer channel is located may not be clearly determined due to existence of multiple initial uplink BWPs, the initial uplink BWP where the resource of the physical layer channel is located may be clearly determined in this disclosure, and reliable monitoring may be performed on the determined initial uplink BWP.

### BRIEF DESCRIPTION OF THE DRAWINGS

FIG. 1 is a schematic diagram illustrating a wireless communication system according to an exemplary embodiment.
FIG. 2 is a flow chart illustrating a method for determining a resource position of a channel according to an exemplary embodiment.
FIG. 3 is a flow chart illustrating a method for determining a resource position of a channel according to another exemplary embodiment.
FIG. 4 is a flow chart illustrating a method for determining a resource position of a channel according to an exemplary embodiment.
FIG. 5 is a flow chart illustrating a method for determining a resource position of a channel according to an exemplary embodiment.
FIG. 6 is a flow chart illustrating a method for determining a resource position of a channel according to an exemplary embodiment.
FIG. 7 is a flow chart illustrating a method for determining a resource position of a channel according to an exemplary embodiment.
FIG. 8 is a flow chart illustrating a method for determining a resource position of a channel according to an exemplary embodiment.
FIG. 9 is a block diagram illustrating an apparatus for determining a resource position of a channel according to an exemplary embodiment.
FIG. 10 is a block diagram illustrating an apparatus for determining a resource position of a channel according to an exemplary embodiment.
FIG. 11 is a schematic diagram illustrating a terminal according to an exemplary embodiment.
FIG. 12 is a block diagram illustrating a base station according to an exemplary embodiment.

### DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all possible implementations consistent with embodiments of the disclosure. Instead, they are merely examples of apparatuses and methods consistent with some aspects of embodiments of the disclosure as detailed in the appended claims.

The term used in embodiments of the disclosure is merely for the purpose of describing a detailed embodiment, and is not intended to limit the disclosure. As used in embodiments of the disclosure and the appended claims, a singular form "a" or "the" is also intended to include plural forms, unless the context clearly indicates other meaning. It should also be understood that, the term "and/or" as used herein refers to including any or all possible combinations of one or more associated listed items.

It should be understood that, although terms "first", "second", "third" and the like may be used in embodiments of the disclosure to describe various kinds of information, the information should not be limited to these terms. These terms are merely used to distinguish a same type of information from each other. For example, without departing from a scope of embodiments of the disclosure, first information may also be called second information, and similarly, the second information may also be called first information. Depending on the context, the word "if' as used herein may be interpreted as "when" or "while" or "in response to determining that".

For the sake of conciseness and easy understanding, terms "greater than" or "less than" are used herein to represent a magnitude relationship. However, for the skilled in the art, it may be understood that the term "greater than" also covers a meaning of "greater than or equal to", and the term "less than" also covers a meaning of "less than or equal to".

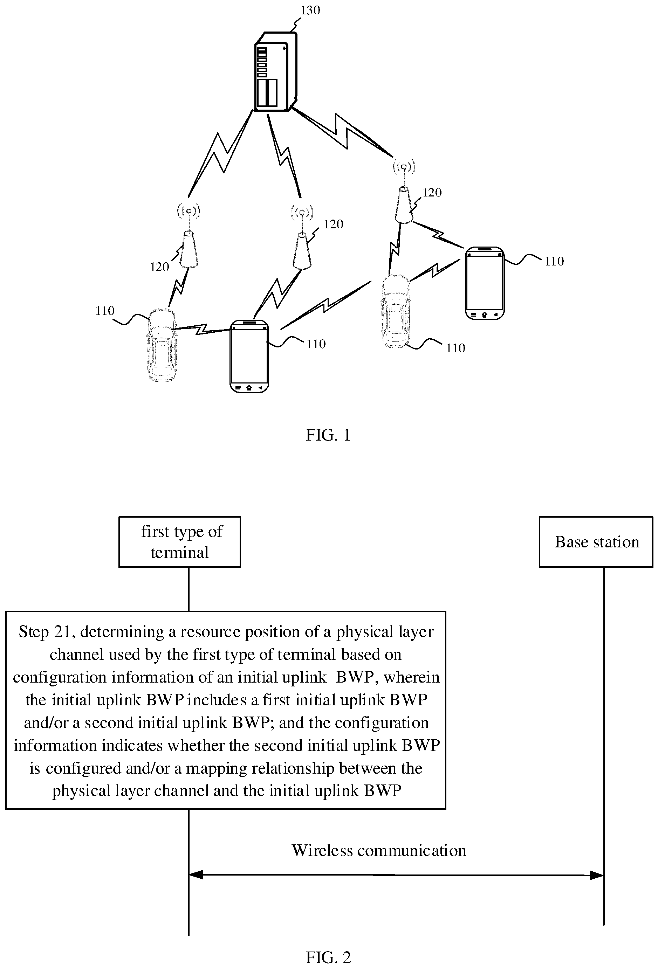

Referring to FIG. 1, FIG. 1 is a schematic diagram illustrating a wireless communication system according to an embodiment of the disclosure. As illustrated in FIG. 1, the wireless communication system is a communication system based on a mobile communication technology, and may include several user equipments 110 and several base stations 120.

The user equipment 110 may be a device that provides voice and/or data connectivity to a user. The user equipment 110 can communicate with one or more core networks via a radio access network (RAN). The user equipment 110 may be an Internet of things user equipment, such as a sensor device, a mobile phone and a computer with an Internet of things user equipment. For example, it can be a fixed, portable, pocket-sized, handheld, built-in computer or vehicle-mounted apparatus, such as a station (STA), a subscriber unit, a subscriber station, a mobile station, a mobile, a remote station, an access point, a remote terminal, an access terminal, a user terminal, a user agent, a user device, or a user equipment (UE). Alternatively, the user equipment 110 may be a device of an unmanned aerial vehicle. Alternatively, the user equipment 110 may be a vehicle-mounted device, for example, a driving computer with a wireless communication function, or a wireless communication device externally connected with the driving computer. Alternatively, the user equipment 110 may be a roadside device, such as a street lamp, a signal lamp or other roadside devices with the wireless communication function.

The base station 120 may be a network device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). Protocol stacks of a packet data convergence protocol (PDCP) layer, a radio link control (RLC) layer and a media access control (MAC) layer are provided in the central unit. A protocol stack of a physical (PHY) layer is provided in the distributed unit. The detailed implementation of the base station 120 is not limited in embodiments of the disclosure.

A wireless connection may be established between the base station 120 and the user equipment 110 through a radio interface. In different implementations, the radio interface is a radio interface based on the 4th generation mobile communication network technology (4G) standard. Alternatively, the radio interface is a radio interface based on the 5th generation mobile communication network technology (5G) standard. For example, the radio interface is a new radio. Alternatively, the radio interface may also be a radio interface based on the next generation mobile communication network technology standard of the 5G.

In some embodiments, an end to end (E2E) connection may also be established between the user equipments 110, such as vehicle to vehicle (V2V) communication, vehicle to infrastructure (V2I) communication and vehicle to pedestrian (V2P) communication in vehicle to everything (V2X) communication.

Here, the above user equipment may be considered as a terminal in the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in embodiments of the disclosure.

In order to facilitate understanding of the skilled in the art, embodiments of the disclosure list multiple implementations to clearly explain the technical solution of embodiments of the disclosure. The skilled in the art may understand that multiple embodiments according to embodiments of the disclosure may be executed separately, or in combination with a method of other embodiments in embodiments of the disclosure, or together with some methods in other related technologies alone or in combination, which is not limited in embodiments of that disclosure.

In order to better understand the technical solution described in any embodiment of the disclosure, an application scene in the related art is described firstly.

In a 4th generation mobile communication technology (4G) system, in order to support Internet of things services, two technologies, i.e., machine type communication (MTC) and narrowband Internet of things (NB-IoT), are proposed.

These two technologies are mainly aimed at a scene with a low rate and a high time delay, such as meter reading, environmental monitoring, or other scenes. In an embodiment, the NB-IoT may support a rate of hundreds of kilobytes (Kb) per second at most, while the MTC may support a rate of several megabytes (Mb) per second at most. With continuous development of the Internet of things services, such as population of services of video surveillance, smart home, wearable devices and industrial sensor monitoring and the like, these services generally require a rate of tens to 100 Mb per second, and have a relative strict requirement for the time delay. Therefore, the MTC and NB-IoT technologies in the 4th generation mobile communication technology are difficult to meet the requirements. In this case, it is proposed to design a new terminal type in the 5G New Radio (NR) to cover a requirement of a middle-level IoT device.

In an embodiment, such new terminal type is called a reduced capability UE, or an NR-lite for short. Here, the Redcap terminal based on 5G NR-lite is generally required to meet following requirements: a low cost and a low complexity; coverage enhancement to a certain extent; and power saving.

Since the 5G new radio is designed for a high-level terminal with a high speed, a low delay and the like, a related design may be difficult to meet the above requirements of the NR-lite. Thus, the NR system may be reformed to meet the requirements of the NR-lite. In an embodiment, in order to meet requirements of the low cost, the low complexity and the like, a radio frequency bandwidth of the NR-IoT may be limited, for example, the radio frequency bandwidth may be limited to 20MHz. In an embodiment, a size of a buffer of the NR-lite may be limited, thus a size of a transport block received every time may be limited. In an embodiment, for the requirement of the power saving, a possible optimization direction is to simplify a communication process and to reduce the number of times of detects a downlink control channel by a NR-lite user.

In an embodiment, an initial uplink bandwidth part (BWP) is defined. The initial uplink BWP includes a physical random access channel (PRACH) for random access, a physical uplink shared channel (PUSCH), a physical uplink control channel (PUCCH) and the like.

In an embodiment, with the introduction of the Redcap terminal, it is supported that a separate initial uplink BWP is configured for the Redcap terminal. From the network point of view, there are two initial uplink BWPs in a system. Thus, for the Redcap terminal, mapping relationships between the PRACH, the PUSCH and the PUCCH and the two initial uplink BWPs is not clear.

As illustrated in FIG. 2, embodiments provide a method for determining a resource position of a channel. The method is performed by a first type of terminal, and includes the following.

At step 21, a resource position of a physical layer channel used by the first type of terminal is determined based on configuration information of an initial uplink BWP.

The initial uplink BWP includes a first initial uplink BWP and/or a second initial uplink BWP; and the configuration information indicates whether the second initial uplink BWP is configured and/or a mapping relationship between the physical layer channel and the initial uplink BWP.

The first type of terminal and a second type of terminal involved in the disclosure may be, but are not limited to, mobile phones, wearable devices, vehicle-mounted terminals, roadside units (RSU), smart home terminals, industrial sensing devices and/or medical devices. The first type of terminal is different from the second type of terminal. In an embodiment, the first type of terminal may be a Redcap terminal, and the second type of terminal may be a non-Redcap terminals other than the Redcap terminal.

A base station involved in the disclosure may be an access device for a terminal to access a network. The base station may be various types of base stations, such as, a base station of the third generation mobile communication (3G) network, a base station of the fourth generation mobile communication (4G) network, a base station of the fifth generation mobile communication (5G) network or other evolved base stations.

In an embodiment, the physical layer channel may be a channel for the first type of terminal to perform random access. In some embodiments, the physical layer channel includes one or more of: a physical random access channel (PRACH), a physical uplink shared channel (PUSCH) and a physical uplink control channel (PUCCH). Monitoring of information may be performed in the physical layer channel when the first type of terminal performs the random access.

It should be noted that, when multiple initial uplink BWPs are configured, the resource position of the physical layer channel may be within a certain initial uplink BWP or multiple initial uplink BWPs. For example, when the first initial uplink BWP and the second initial uplink BWP are configured, the resource position of the physical layer channel may be within the first initial uplink BWP or the second initial uplink BWP. In an embodiment, when the physical layer channel is within a single BWP, only the single BWP needs to be monitored. Alternatively, when the physical layer channel is within multiple BWPs, the multiple BWPs may be monitored simultaneously.

In an embodiment, the first initial uplink BWP is a BWP for the second type of terminal to use, or the first initial uplink BWP is a BWP for the first type of terminal and the second type of terminal to use. The second initial uplink BWP is a BWP for the first type of terminal to use.

In an embodiment, the configuration information of the initial uplink BWP is obtained. The initial uplink BWP includes the first initial uplink BWP and/or the second initial uplink BWP. The configuration information is configured to indicate at least one of: whether the second initial uplink BWP is configured; or the mapping relationship between the physical layer channel and the initial uplink BWP. The resource position of the physical layer channel used by the first type of terminal is determined based on the configuration information of the initial uplink BWP. When the random access is performed, channel monitoring is performed on the initial uplink BWP where the resource position of the physical layer channel is located. It should be noted that, the configuration information may be received configuration information sent by the base station, configuration information determined based on a predetermined protocol, or configuration information pre-configured on the first type of terminal, which is not limited here.

In an embodiment, the configuration information of the initial uplink BWP sent by the base station is received. The initial uplink BWP includes the first initial uplink BWP and/or the second initial uplink BWP. The configuration information is configured to indicate at least one of: whether the second initial uplink BWP is configured, or the mapping relationship between the physical layer channel and the initial uplink BWP. The resource position of the physical layer channel used by the first type of terminal is determined based on the configuration information of the initial uplink BWP. When the random access is performed, the channel monitoring is performed on the initial uplink BWP where the resource position of the physical layer channel is located.

In an embodiment, the configuration information may indicate the mapping relationship between the physical layer channel and the initial uplink BWP in an explicit manner. For example, the configuration information may include the initial uplink BWP, the physical layer channel and the relationship between the initial uplink BWP and the physical layer channel. Referring to Table 1, Table 1 illustrates a mapping relationship indicated explicitly. Resource positions of the PRACH and the PUCCH are within the first initial uplink BWP and the second initial uplink BWP, and a resource position of the PUSCH is within the second initial uplink BWP. In this way, after the configuration information is obtained, the first type of terminal may determine the resource position of the physical layer channel used by the first type of terminal based on the mapping relationship indicated by the configuration information in the explicit manner. When the random access is performed, the channel monitoring is performed on the initial uplink BWP where the determined resource position of the physical layer channel is located.

**Table one**

| initial uplink BWPs | physical layer channels |
|---|---|
| first initial uplink BWP | PRACH |
| | PUCCH |
| second initial uplink BWP | PRACH |
| | PUCCH |
| | PUSCH |

In an embodiment, the configuration information may indicate the mapping relationship between the physical layer channel and the initial uplink BWP in an implicit way. For example, the configuration information may only include the initial uplink BWP. After the first type of terminal obtains the configuration information, in case that the configuration information includes the first initial uplink BWP and the second initial uplink BWP, the first type of terminal may determine, based on the mapping relationship indicated by the configuration information in the implicit way, that the resource position of the physical layer channel used by the first type of terminal is within the second initial uplink BWP. When the random access is performed, the channel monitoring is performed on the initial uplink BWP where the determined resource position of the physical layer channel is located.

In an embodiment, the initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The first initial uplink BWP is a BWP for the second type of terminal to use, and the second initial uplink BWP is a BWP for the first type of terminal to use. The configuration information indicates whether the second initial uplink BWP is configured and/or the mapping relationship between the physical layer channel and the initial uplink BWP.

In an embodiment, the initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The first initial uplink BWP is a BWP for the first type of terminal and the second type of terminal to use, and the second initial uplink BWP is the BWP for the first type of terminal to use. The configuration information indicates whether the second initial uplink BWP is configured and/or the mapping relationship between the physical layer channel and the initial uplink BWP.

In an embodiment, the initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The configuration information indicates whether the second initial uplink BWP is configured and/or the mapping relationship between the physical layer channel and the initial uplink BWP. The second initial uplink BWP is monitored in response to the first type of terminal performing the random access.

In an embodiment, the initial uplink BWP indicated by the configuration information is determined. In response to the configuration information indicating that the network is configured with the first initial uplink BWP and the second initial uplink BWP, and the configuration information indicating that the resource position of the physical layer channel is within the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The configuration information indicates whether the second initial uplink BWP is configured and/or the mapping relationship between the physical layer channel and the initial uplink BWP. The second initial uplink BWP is monitored in response to the first type of terminal performing the random access.

In an embodiment, the initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the first initial uplink BWP. The initial uplink BWP includes the first initial uplink BWP and the second initial uplink BWP. The configuration information indicates whether the second initial uplink BWP is configured and/or the mapping relationship between the physical layer channel and the initial uplink BWP. The first initial uplink BWP is monitored in response to the first type of terminal performing the random access.

In an embodiment, in response to the configuration information indicating that the network is configured with the first initial uplink BWP and the second initial uplink BWP, and the configuration information indicating that the resource position of the physical layer channel is within the first initial uplink BWP and not within the second initial uplink BWP, it is determined that the resource position of the physical layer channel used by the first type of terminal is within the first initial uplink BWP. The initial uplink BWP includes the first initial uplink BWP and the second initial uplink BWP. The configuration information indicates whether the second initial uplink BWP is configured and/or the mapping relationship between the physical layer channel and the initial uplink BWP. The first initial uplink BWP is monitored in response to the first type of terminal performing the random access.

In an embodiment, the initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the first initial uplink BWP and the second initial uplink BWP. The initial uplink BWP includes the first initial uplink BWP and the second initial uplink BWP. The configuration information indicates whether the second initial uplink BWP is configured and/or the mapping relationship between the physical layer channel and the initial uplink BWP. The first initial uplink BWP and the second initial uplink BWP are monitored in response to the first type of terminal performing the random access.

It should be noted that, the resource positions of multiple physical layer channels used by the first type of terminal are respectively distributed in the first initial uplink BWP and the second initial uplink BWP. For example, the physical layer channels include three channels, i.e., the PRACH, the PUCCH and the PUSCH. The resource position of the PRACH may be located in the second initial uplink BWP, and the resource locations of the PUCCH and the PUSCH may be located in the first initial uplink BWP. Distribution of the resource positions of the multiple physical layer channels is not limited to the above way, and may be flexibly set in the first initial uplink BWP and the second initial uplink BWP based on a detailed application scene.

In an embodiment, in response to the configuration information indicating that the resource position of the physical layer channel used by the first type of terminal is within the first initial uplink BWP and the second initial uplink BWP, the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; or
total frequency resources occupied by the first initial uplink BWP and the second initial uplink BWP being within a bandwidth range supported by the first type of terminal.

In embodiments of the disclosure, the resource position of the physical layer channel used by the terminal is determined based on the configuration information of the initial uplink BWP. The initial uplink BWP includes the first initial uplink BWP and/or the second initial uplink BWP. The configuration information indicates whether the second initial uplink BWP is configured and/or the mapping relationship between the physical layer channel and the initial uplink BWP. Here, the configuration information indicates whether the second initial uplink BWP is configured and/or the mapping relationship between the physical layer channel and the initial uplink BWP, thus the terminal may determine the initial uplink BWP where the resource of the physical layer channel is located based on the configuration information, and perform monitoring on the initial uplink BWP where the resource of the physical layer channel is located. Compared with a condition where the initial uplink BWP where the resource of the physical layer channel is located may not be clearly determined due to existence of multiple initial uplink BWPs, the initial uplink BWP where the resource of the physical layer channel is located may be clearly determined in this disclosure, and reliable monitoring may be performed on the determined initial uplink BWP.

It should be noted that, the skilled in the art may understand that the methods according to embodiments of the disclosure may be executed separately, or executed together with some methods in embodiments of the disclosure or some methods in the related art.

In an embodiment, the first initial uplink BWP is the BWP for the second type of terminal to use, or the first initial uplink BWP is the BWP for the first type of terminal and the second type of terminal to use. The second initial uplink BWP is the BWP for the first type of terminal to use.

In an embodiment, the physical layer channel includes one or more of: the PRACH, the PUSCH and the PUCCH.

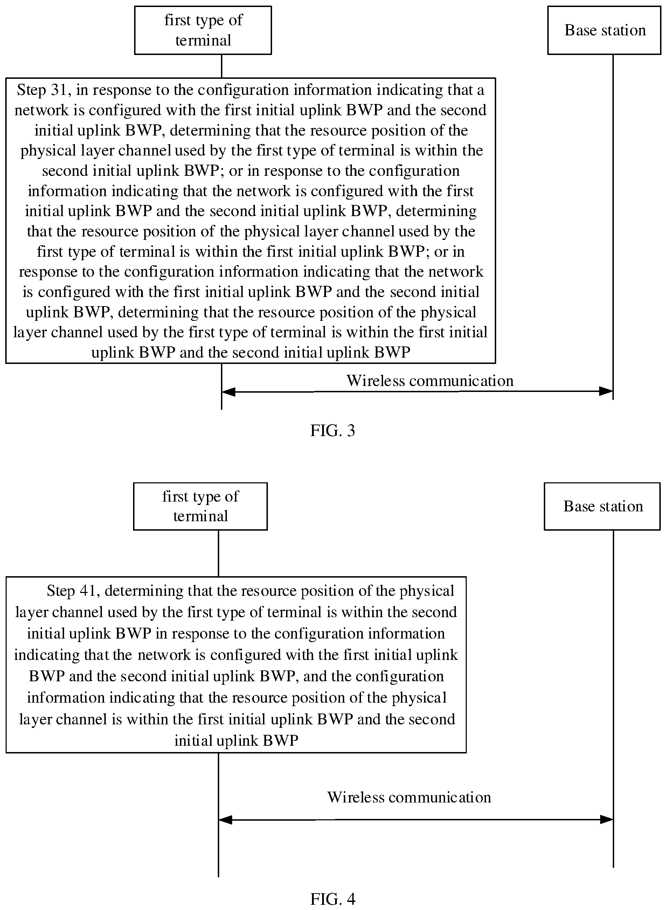

As illustrated in FIG. 3, embodiments of the disclosure provide a method for determining a resource position of a channel. The method is performed by a first type of terminal, and includes the following.

At step 31, in response to the configuration information indicating that a network is configured with the first initial uplink BWP and the second initial uplink BWP, it is determined that the resource position of the physical layer channel used by the first type of terminal is within the second initial uplink BWP;
or
in response to the configuration information indicating that the network is configured with the first initial uplink BWP and the second initial uplink BWP, it is determined that the resource position of the physical layer channel used by the first type of terminal is within the first initial uplink BWP;
   or
in response to the configuration information indicating that the network is configured with the first initial uplink BWP and the second initial uplink BWP, it is determined that the resource position of the physical layer channel used by the first type of terminal is within the first initial uplink BWP and the second initial uplink BWP.

In an embodiment, the first initial uplink BWP is a BWP for the second type of terminal to use, or the first initial uplink BWP is a BWP for the first type of terminal and the second type of terminal to use. The second initial uplink BWP is a BWP for the first type of terminal to use.

In an embodiment, the configuration information sent by a base station is received, and the initial uplink BWP indicated by the configuration information is determined. The configuration information indicates whether the second initial uplink BWP is configured and/or the mapping relationship between the physical layer channel and the initial uplink BWP. In response to the configuration information indicating that the network is configured with the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The second initial uplink BWP is monitored in response to the first type of terminal performing the random access.

In an embodiment, the configuration information sent by the base station is received, and the initial uplink BWP indicated by the configuration information is determined. The configuration information indicates whether the second initial uplink BWP is configured and/or the mapping relationship between the physical layer channel and the initial uplink BWP. In response to the configuration information indicating that the network is configured with the first initial uplink BWP and the second initial uplink BWP, it is determined that the resource position of the physical layer channel used by the first type of terminal is within the first initial uplink BWP. The initial uplink BWP includes the first initial uplink BWP and the second initial uplink BWP. The first initial uplink BWP is monitored in response to the first type of terminal performing the random access.

In an embodiment, the configuration information sent by the base station is received, and the initial uplink BWP indicated by the configuration information is determined. The configuration information indicates whether the second initial uplink BWP is configured and/or the mapping relationship between the physical layer channel and the initial uplink BWP. In response to the configuration information indicating that the network is configured with the first initial uplink BWP and the second initial uplink BWP, it is determined that the resource position of the physical layer channel used by the first type of terminal is within the first initial uplink BWP and the second initial uplink BWP. The initial uplink BWP includes the first initial uplink BWP and the second initial uplink BWP. The first initial uplink BWP and the second initial uplink BWP are monitored in response to the first type of terminal performing the random access.

It should be noted that the skilled in the art may understand that the methods according to embodiments of the disclosure may be executed separately, or executed together with some methods in embodiments of the disclosure or some methods in the related art.

As illustrated in FIG. 4, embodiments provide a method for determining a resource position of a channel. The method is performed by the first type of terminal, and includes the following.

At step 41, it is determined that the resource position of the physical layer channel used by the first type of terminal is within the second initial uplink BWP in response to the configuration information indicating that the network is configured with the first initial uplink BWP and the second initial uplink BWP, and the configuration information indicating that the resource position of the physical layer channel is within the first initial uplink BWP and the second initial uplink BWP.

In an embodiment, the first initial uplink BWP is a BWP for the second type of terminal to use, or the first initial uplink BWP is a BWP for the first type of terminal and the second type of terminal to use. The second initial uplink BWP is a BWP for the first type of terminal to use.

In an embodiment, the configuration information sent by a base station is received, and the initial uplink BWP indicated by the configuration information is determined. The configuration information indicates whether the second initial uplink BWP is configured and/or the mapping relationship between the physical layer channel and the initial uplink BWP. In response to the configuration information indicating that the network is configured with the first initial uplink BWP and the second initial uplink BWP, and the configuration information indicating that the resource position of the physical layer channel is within the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The second initial uplink BWP is monitored in response to the first type of terminal performing the random access.

It should be noted that, the skilled in the art may understand that, the methods according to embodiments of the disclosure may be executed separately, or executed together with some methods in embodiments of the disclosure or some methods in the related art.

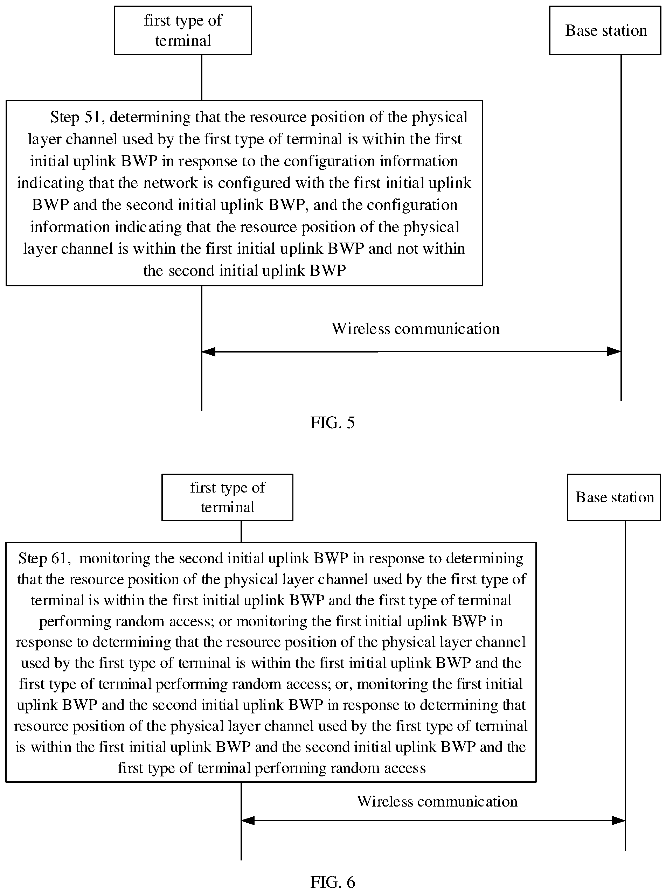

As illustrated in FIG. 5, embodiments provide a method for determining a resource position of a channel. The method is performed by the first type of terminal, and includes the following.

At step 51, it is determined that the resource position of the physical layer channel used by the first type of terminal is within the first initial uplink BWP in response to the configuration information indicating that the network is configured with the first initial uplink BWP and the second initial uplink BWP, and the configuration information indicating that the resource position of the physical layer channel is within the first initial uplink BWP and not within the second initial uplink BWP.

In an embodiment, the first initial uplink BWP is a BWP for the second type of terminal to use, or the first initial uplink BWP is a BWP for the first type of terminal and the second type of terminal to use. The second initial uplink BWP is a BWP for the first type of terminal to use.

In an embodiment, the configuration information sent by the base station is received, and the initial uplink BWP indicated by the configuration information is determined. The configuration information indicates whether the second initial uplink BWP is configured and/or the mapping relationship between the physical layer channel and the initial uplink BWP. In response to the configuration information indicating that the network is configured with the first initial uplink BWP and the second initial uplink BWP, and the configuration information indicating that the resource position of the physical layer channel is within the first initial uplink BWP and not within the second initial uplink BWP, it is determined that the resource position of the physical layer channel used by the first type of terminal is within the first initial uplink BWP. The initial uplink BWP includes the first initial uplink BWP and the second initial uplink BWP. The first initial uplink BWP is monitored in response to the first type of terminal performing the random access.

It should be noted that, the skilled in the art may understand that the methods according to embodiments of the disclosure may be executed separately, or executed together with some methods in embodiments of the disclosure or some methods in the related art.

As illustrated in FIG. 6, embodiments provide a method for determining a resource position of a channel. The method is performed by the first type of terminal, and includes the following.

At step 61, the second initial uplink BWP is monitored in response to determining that the resource position of the physical layer channel used by the first type of terminal is within the first initial uplink BWP and the first type of terminal performs the random access;
or
the first initial uplink BWP is monitored in response to determining that the resource position of the physical layer channel used by the first type of terminal is within the first initial uplink BWP and the first type of terminal performs the random access;
   or
the first initial uplink BWP and the second initial uplink BWP are monitored in response to determining that resource position of the physical layer channel used by the first type of terminal is within the first initial uplink BWP and the second initial uplink BWP and the first type of terminal performs the random access.

In an embodiment, the first initial uplink BWP is a BWP for the second type of terminal to use, or the first initial uplink BWP is a BWP for the first type of terminal and the second type of terminal to use. The second initial uplink BWP is a BWP for the first type of terminal to use.

In an embodiment, the configuration information sent by the base station is received, and the initial uplink BWP indicated by the configuration information is determined. The configuration information indicates whether the second initial uplink BWP is configured and/or the mapping relationship between the physical layer channel and the initial uplink BWP. In response to the configuration information indicating that the network is configured with the first initial uplink BWP and the second initial uplink BWP, it is determined that the resource position of the physical layer channel used by the first type of terminal is within the second initial uplink BWP. The initial uplink BWP includes the first initial uplink BWP and the second initial uplink BWP. The second initial uplink BWP is monitored in response to determining that the resource position of the physical layer channel used by the first type of terminal is within the first initial uplink BWP and the first type terminal performs the random access.

In an embodiment, the configuration information sent by the base station is received, and the initial uplink BWP indicated by the configuration information is determined. The configuration information indicates whether the second initial uplink BWP is configured and/or the mapping relationship between the physical layer channel and the initial uplink BWP. The initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the first initial uplink BWP. The initial uplink BWP includes the first initial uplink BWP and the second initial uplink BWP. The first initial uplink BWP is monitored in response to the first type of terminal performing the random access. The first initial uplink BWP is monitored in response to determining that the resource position of the physical layer channel used by the first type of terminal is within the first initial uplink BWP and the first type of terminal performs the random access.

In an embodiment, the configuration information sent by the base station is received, and the initial uplink BWP indicated by the configuration information is determined. The configuration information indicates whether the second initial uplink BWP is configured and/or the mapping relationship between the physical layer channel and the initial uplink BWP. The initial uplink BWP indicated by the configuration information is determined. In response to the configuration information indicating that the network is configured with the first initial uplink BWP and the second initial uplink BWP, it is determined that the resource position of the physical layer channel used by the first type of terminal is within the first initial uplink BWP and the second initial uplink BWP. The initial uplink BWP includes the first initial uplink BWP and the second initial uplink BWP. The first initial uplink BWP and the second initial uplink BWP are monitored in response to determining that the resource position of the physical layer channel used by the first type of terminal is within the first initial uplink BWP and the second initial uplink BWP and the first type of terminal performs the random access.

It should be noted that, the skilled in the art may understand that the methods according to embodiments of the disclosure may be executed separately, or executed together with some methods in embodiments of the disclosure or some methods in the related art.

In an embodiment, in response to the configuration information indicating that the resource position of the physical layer channel used by the first type of terminal is within the first initial uplink BWP and the second initial uplink BWP, the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; or
total frequency resources occupied by the first initial uplink BWP and the second initial uplink BWP being within a bandwidth range supported by the first type of terminal.

It should be noted that, considering a limited factor that a time division duplex (TDD) system requires a same central frequency point for the uplink BWP and the downlink BWP, the method corresponding to this embodiment may be applied to a frequency division duplex (FDD) system but not to the TDD system.

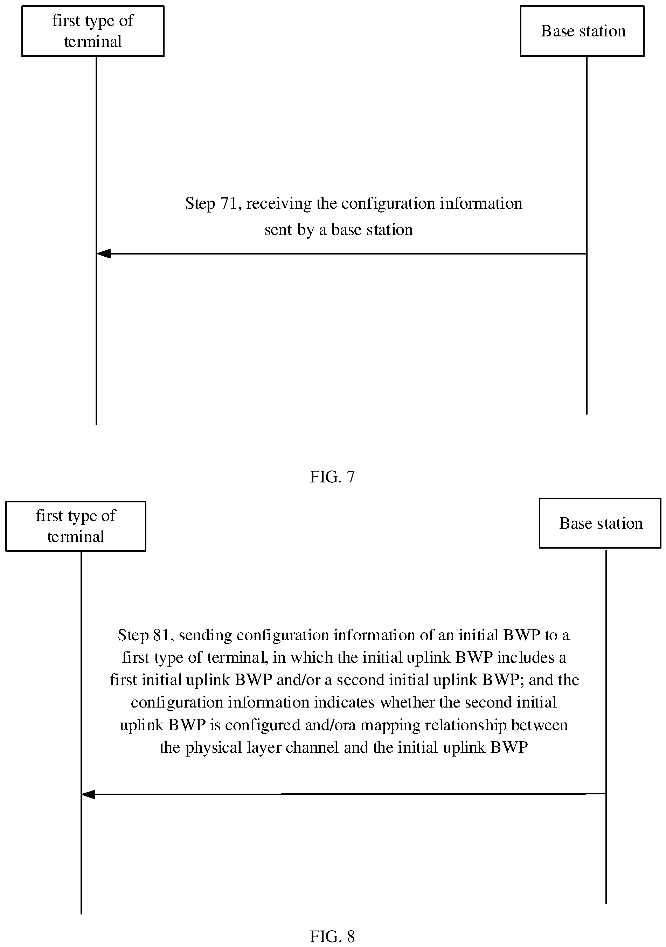

As illustrated in FIG. 7, embodiments provide a method for determining a resource position of a channel. The method is performed by the first type of terminal, and includes the following.

At step 71, the configuration information sent by a base station is received.

In an embodiment, the configuration information of the initial uplink BWP sent by the base station to the terminal is received.

The initial uplink BWP includes the first initial uplink BWP and/or the second initial uplink BWP. The configuration information indicates whether the second initial uplink BWP is configured and/or the mapping relationship between the physical layer channel and the initial uplink BWP.

In an embodiment, the configuration information of the initial uplink BWP sent by the base station through a system message is received. The initial uplink BWP includes the first initial uplink BWP and/or the second initial uplink BWP. The configuration information indicates whether the second initial uplink BWP is configured and/or the mapping relationship between the physical layer channel and the initial uplink BWP. The resource position of the physical layer channel used by the first type of terminal is determined based on the configuration information of the initial uplink BWP. When the random access is performed, the channel monitoring is performed on the initial uplink BWP where the resource position of the physical layer channel is located.

It should be noted that, the skilled in the art may understand that the methods according to embodiments of the disclosure may be executed separately, or executed together with some methods in embodiments of the disclosure or some methods in the related art.

As illustrated in FIG. 8, embodiments provide a method for determining a resource position of a channel. The method is performed by a base station, and includes the following.

At step 81, configuration information of an initial uplink BWP is sent to a first type of terminal.

The initial uplink BWP includes a first initial uplink BWP and/or a second initial uplink BWP; and the configuration information indicates whether the second initial uplink BWP is configured and/or a mapping relationship between the physical layer channel and the initial uplink BWP.

The first type of terminal and the second type of terminal involved in the disclosure may be, but are not limited to, mobile phones, wearable devices, vehicle-mounted terminals, roadside units (RSU), smart home terminals, industrial sensing devices and/or medical devices. The first type of terminal is different from the second type of terminal. In an embodiment, the first type of terminal may be a Redcap terminal, and the second type of terminal may be a non-Redcap terminals other than the Redcap terminal.

The base station involved in the disclosure may be an access device for a terminal to access a network. The base station may be various types of base stations, such as, a base station of the third generation mobile communication (3G) network, a base station of the fourth generation mobile communication (4G) network, a base station of the fifth generation mobile communication (5G) network or other evolved base stations.

In an embodiment, the physical layer channel may be a channel for the first type of terminal to perform random access. In some embodiments, the physical layer channel includes one or more of: a physical random access channel, a physical uplink shared channel and a physical uplink control channel. Monitoring of information may be performed in the physical layer channel when the first type of terminal performs the random access.

It should be noted that, when multiple initial uplink BWPs are configured, the resource position of the physical layer channel may be within a certain initial uplink BWP or multiple initial uplink BWPs. For example, when the first initial uplink BWP and the second initial uplink BWP are configured, the resource position of the physical layer channel may be within the first initial uplink BWP or the second initial uplink BWP. In an embodiment, when the physical layer channel is within a single BWP, the first terminal may monitor the single BWP. Alternatively, when the physical layer channel is within multiple BWPs, the first terminal may monitor the multiple BWPs simultaneously.

In an embodiment, the first initial uplink BWP is a BWP for a second type of terminal to use, or the first initial uplink BWP is a BWP for the first type of terminal and the second type of terminal to use. The second initial uplink BWP is a BWP for the first type of terminal to use.

In an embodiment, the base station sends the configuration information of the initial uplink BWP to the first type of terminal. The initial uplink BWP includes the first initial uplink BWP and/or the second initial uplink BWP. The configuration information is configured to indicate whether the second initial uplink BWP is configured and/or to the mapping relationship between the physical layer channel and the initial uplink BWP. After receiving the configuration information, the first type of terminal determines the resource position of the physical layer channel used by the first type of terminal based on the configuration information. When the random access is performed, the first type of terminal performs channel monitoring on the initial uplink BWP where the resource position of the physical layer channel is located.

In an embodiment, the configuration information may indicate the mapping relationship between the physical layer channel and the initial uplink BWP in an explicit manner. For example, the configuration information may include the initial uplink BWP, the physical layer channel and the relationship between the initial uplink BWP and the physical layer channel. Referring to Table 1 again, it illustrates a mapping relationship indicated explicitly. Resource positions of the PRACH and the PUCCH are within the first initial uplink BWP and the second initial uplink BWP, and a resource position of the PUSCH is within the second initial uplink BWP. In this way, after the configuration information is obtained, the first type of terminal may determine the resource position of the physical layer channel used by the first type of terminal based on the mapping relationship indicated by the configuration information in the explicit manner. When the random access is performed, the channel monitoring is performed on the initial uplink BWP where the determined resource position of the physical layer channel is located.

In an embodiment, the configuration information may indicate the mapping relationship between the physical layer channel and the initial uplink BWP in an implicit way. For example, the configuration information may only include the initial uplink BWP. The base station sends the configuration information to the first type of terminal. After the first type of terminal obtains the configuration information, in case that the configuration information includes the first initial uplink BWP and the second initial uplink BWP, the first type of terminal may determine, based on the mapping relationship indicated by the configuration information in the implicit way, that the resource position of the physical layer channel used by the first type of terminal is in the second initial uplink BWP. When the random access is performed, the first type of terminal performs the channel monitoring on the initial uplink BWP where the determined resource position of the physical layer channel is located.

In an embodiment, the base station sends the configuration information to the first type of terminal. The configuration information indicates whether the second initial uplink BWP is configured and/or the mapping relationship between the physical layer channel and the initial uplink BWP. The first type of terminal determines the initial uplink BWP indicated by the configuration information. In response to the configuration information indicating that the network is configured with the first initial uplink BWP and the second initial uplink BWP, the first type of terminal determines that the resource position of the physical layer channel used by the first type of terminal is within the second initial uplink BWP. The initial uplink BWP includes the first initial uplink BWP and the second initial uplink BWP. The first initial uplink BWP is the BWP for the second type of terminal to use, and the second initial uplink BWP is the BWP for the first type of terminal to use.

In an embodiment, the base station sends the configuration information to the first type of terminal. The configuration information indicates whether the second initial uplink BWP is configured and/or the mapping relationship between the physical layer channel and the initial uplink BWP. The first type of terminal determines the initial uplink BWP indicated by the configuration information. In response to the configuration information indicating that the network is configured with the first initial uplink BWP and the second initial uplink BWP, the first type of terminal determines that the resource position of the physical layer channel used by the first type of terminal is within the second initial uplink BWP. The initial uplink BWP includes the first initial uplink BWP and the second initial uplink BWP. The first initial uplink BWP is the BWP for the first type of terminal to use, and the second initial uplink BWP is the BWP for the first type of terminal to use.

In an embodiment, the configuration information indicates that the network is configured with the first initial uplink BWP and the second initial uplink BWP.

In an embodiment, the base station sends the configuration information to the first type of terminal. The configuration information indicates that the network is configured with the first initial uplink BWP and the second initial uplink BWP. The initial uplink BWP includes the first initial uplink BWP and the second initial uplink BWP. The first type of terminal determines the initial uplink BWP indicated by the configuration information. In response to the configuration information indicating that the network is configured with the first initial uplink BWP and the second initial uplink BWP, the first type of terminal determines that the resource position of the physical layer channel used by the first type of terminal is within the second initial uplink BWP. In response to the first type of terminal performing the random access, the first type of terminal monitors the second initial uplink BWP.

In an embodiment, the configuration information indicates that the network is configured with the first initial uplink BWP and the second initial uplink BWP, and the configuration information indicates that the resource position of the physical layer channel is within the first initial uplink BWP and the second initial uplink BWP.

In an embodiment, the base station sends the configuration information to the first type of terminal. The configuration information indicates that the network is configured with the first initial uplink BWP and the second initial uplink BWP, and the configuration information indicates that the resource position of the physical layer channels is within the first initial uplink BWP and the second initial uplink BWP. The first type of terminal determines the initial uplink BWP indicated by the configuration information. In response to the configuration information indicating that the network is configured with the first initial uplink BWP and the second initial uplink BWP, and the configuration information indicating that the resource position of the physical layer channel is within the first initial uplink BWP and the second initial uplink BWP, the first type of terminal determines that the resource position of the physical layer channel used by the first type of terminal is within the second initial uplink BWP. In response to the first type of terminal performing the random access, the first type of terminal monitors the second initial uplink BWP.

In an embodiment, the configuration information indicates that the network is configured with the first initial uplink BWP and the second initial uplink BWP.

In an embodiment, the base station sends the configuration information to the first type of terminal. The configuration information indicates that the network is configured with the first initial uplink BWP and the second initial uplink BWP. The first type of terminal determines the initial uplink BWP indicated by the configuration information. In response to the configuration information indicating that the network is configured with the first initial uplink BWP and the second initial uplink BWP, the first type of terminal determines that the resource position of the physical layer channel used by the first type of terminal is within the first initial uplink BWP. In response to the first type of terminal performing the random access, the first type of terminal monitors the first initial uplink BWP.

In an embodiment, the configuration information indicates that the network is configured with the first initial uplink BWP and the second initial uplink BWP, and the configuration information indicates that the resource position of the physical layer channel is within the first initial uplink BWP and not within the second initial uplink BWP.

In an embodiment, the base station sends the configuration information to the first type of terminal. The configuration information indicates that the network is configured with the first initial uplink BWP and the second initial uplink BWP, and the configuration information indicates that the resource position of the physical layer channel is within the first initial uplink BWP and not within the second initial uplink BWP. The first type of terminal determines the initial uplink BWP indicated by the configuration information. In response to the configuration information indicating that the network is configured with the first initial uplink BWP and the second initial uplink BWP, and the configuration information indicating that the resource position of the physical layer channel is within the first initial uplink BWP and not within the second initial uplink BWP, the first type of terminal determines that the resource position of the physical layer channel used by the first type of terminal is within the first initial uplink BWP. In response to the first type of terminal performing the random access, the first type terminal monitors the first initial uplink BWP.

In an embodiment, the base station sends the configuration information to the first type of terminal. The configuration information indicates that the network is configured with the first initial uplink BWP and the second initial uplink BWP. The first type of terminal determines the initial uplink BWP indicated by the configuration information. In response to the configuration information indicating that the network is configured with the first initial uplink BWP and the second initial uplink BWP, the first type of terminal determines that the resource position of the physical layer channel used by the first type of terminal is within the first initial uplink BWP and the second initial uplink BWP. In response to the first type of terminal performing the random access, the first type of terminal monitors the first initial uplink BWP and the second initial uplink BWP.

It should be noted that, resource positions of multiple physical layer channels used by the first type of terminal may be distributed in the first initial uplink BWP and the second initial uplink BWP respectively. For example, the physical layer channels include three channels, i.e., the PRACH, the PUCCH and the PUSCH. The resource position of the PRACH may be located in the second initial uplink BWP, and the resource positions of the PUCCH and the PUSCH may be located in the first initial uplink BWP. Distribution of the resource positions of the multiple physical layer channels is not limited to the above way, and may be flexibly set in the first initial uplink BWP and the second initial uplink BWP based on a detailed application scene.

In an embodiment, in response to the configuration information indicating that the resource position of the physical layer channel used by the first type of terminal is within the first initial uplink BWP and the second initial uplink BWP, the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; and
total frequency resources occupied by the first initial uplink BWP and the second initial uplink BWP being within a bandwidth range supported by the first type of terminal.

It should be noted that, the skilled in the art may understand that the methods according to embodiments of the disclosure may be executed separately, or executed together with some methods in embodiments of the disclosure or some methods in the related art.

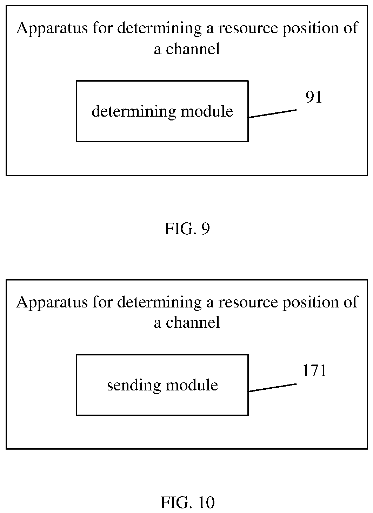

As illustrated in FIG. 9, embodiments of the disclosure provide an apparatus for determining a resource position of a channel. The apparatus includes:
a determining module 91, configured to determine a resource position of a physical layer channel used by a first type of terminal based on configuration information of an initial uplink BWP.

The initial uplink BWP includes a first initial uplink BWP and/or a second initial uplink BWP; and the configuration information indicates whether the second initial uplink BWP is configured and/or a mapping relationship between the physical layer channel and the initial uplink BWP.

It should be noted that, the skilled in the art may understand that the methods according to embodiments of the disclosure may be executed separately, or executed together with some methods in embodiments of the disclosure or some methods in the related art.

As illustrated in FIG. 10, embodiments of the disclosure provide an apparatus for determining a resource position of a channel. The apparatus includes:
a sending module 101, configured to send configuration information of an initial uplink BWP to a first type of terminal,

The initial uplink BWP includes a first initial uplink BWP and/or a second initial uplink BWP; and the configuration information indicates whether the second initial uplink BWP is configured and/or indicates a mapping relationship between the physical layer channel and the initial uplink BWP.

It should be noted that, the skilled in the art may understand that the methods according to embodiments of the disclosure may be executed separately, or executed together with some methods in embodiments of the disclosure or some methods in the related art.

Embodiments of the disclosure provide a communication device. The communication device includes:
a processor; and
a memory, configured to store instructions executable by the processor;

The processor is configured to execute the executable instructions to implement the method according to any embodiment of the disclosure.

The processor may include various types of storage mediums, which are non-transitory computer storage medium, and may continue to memory information stored thereon after the communication device is powered off.

The processor may be coupled with the memory through a bus or the like for reading an executable program stored on the memory.

Embodiments of the disclosure also provide a computer storage medium. The computer storage medium has a computer executable program stored thereon, and the executable program is executed by a processor to implement the method according to any embodiment of the disclosure.

With regard to the apparatuses in the above embodiments, the detailed way in which each module performs operations has been described in detail in embodiments of the method, which is not be described in detail herein.

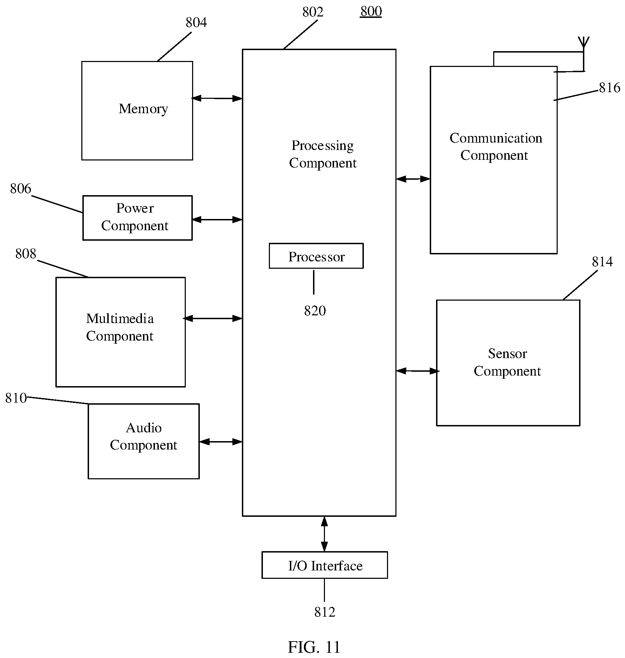

As illustrated in FIG. 11, an embodiment of the disclosure provides a structure of a terminal.

Referring to a terminal 800 illustrated in FIG. 11, the embodiment provides the terminal 800. The terminal 800 may be a mobile phone, a computer, a digital broadcasting terminal, a message sending and receiving equipment, a game controller, a tablet, a medical device, a fitness equipment, a personal digital assistant or the like.

Referring to FIG. 11, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communication, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contacts data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have a focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules. The peripheral interface modules may be such as keyboards, click wheels, buttons, and the like. The buttons may include, but be not limited to, a home button, a volume button, a starting button, and a locking button.

The sensor component 814 includes one or more sensors to provide status assessments of various aspects of the terminal 800. For example, the sensor component 814 may detect an open/closed status of the terminal 800, relative positioning of components, e.g., the display and the keypad, of the terminal 800, a change in a position of the terminal 800 or a component of the terminal 800, a presence or absence of a user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in an imaging application. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 may access a wireless network based on a communication standard, such as Wi-Fi, 2G, or 3G, or a combination thereof. In an exemplary embodiment, the communication component 816 receives a broadcast signal from an external broadcast management system or broadcast associated information via a broadcast channel. In one exemplary embodiment, the communication component 816 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer readable storage medium including instructions, such as the memory 804 including instructions that are executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

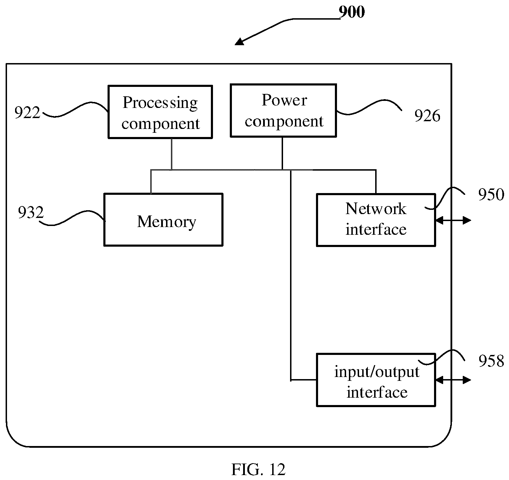

As illustrated in FIG. 12, an embodiment of the disclosure illustrates a structure of a base station. For example, the base station 900 may be provided as a network device. Referring to FIG. 12, the base station 900 includes a processing component 922 including one or more processors, and memory resources represented by a memory 932 for storing instructions, such as an application program, executable by the processing component 922. The application program stored in the memory 932 may include one or more modules each corresponding to a set of instructions. In addition, the processing component 922 is configured to execute instructions to execute any of the above method applied to the base station.

The base station 900 may also include a power component 926 configured to perform power management of the base station 900, a wired or wireless network interface 950 configured to connect the base station 900 to a network, and an input/output (I/O) interface 958. The base station 900 may operate an operating system stored in the memory 932, such as a windows server^{™}, a Mac OS X^{™}, a Unix^{™}, a Linux^{™}, a FreeBSD^{™} or the like.

Other implementations of the disclosure may be apparent to the skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. A method for determining a resource position of a channel, performed by a first type of terminal, comprising:
determining, based on configuration information of an initial uplink bandwidth part (BWP), a resource position of a physical layer channel used by the first type of terminal,
wherein the initial uplink BWP comprises a first initial uplink BWP and/or a second initial uplink BWP; and the configuration information indicates whether the second initial uplink BWP is configured and/or a mapping relationship between the physical layer channel and the initial uplink BWP.

2. The method of claim 1, wherein
the first initial uplink BWP is a BWP for a second type of terminal to use, or the first initial uplink BWP is a BWP for the first type of terminal and the second type of terminal to use; and
the second initial uplink BWP is a BWP for the first type of terminal to use.

3. The method of claim 1, wherein the physical layer channel comprises one or more of:
a physical random access channel (PRACH), a physical uplink shared channel (PUSCH), or a physical uplink control channel (PUCCH).

4. The method of claim 1, wherein determining the resource position of the physical layer channel used by the first type of terminal based on the configuration information of the initial uplink BWP comprises:
in response to the configuration information indicating that a network is configured with the first initial uplink BWP and the second initial uplink BWP, determining that the resource position of the physical layer channel used by the first type of terminal is within the second initial uplink BWP;
in response to the configuration information indicating that a network is configured with the first initial uplink BWP and the second initial uplink BWP, determining that the resource position of the physical layer channel used by the first type of terminal is within the first initial uplink BWP; or
in response to the configuration information indicating that a network is configured with the first initial uplink BWP and the second initial uplink BWP, determining that the resource position of the physical layer channel used by the first type of terminal is within the first initial uplink BWP and the second initial uplink BWP.

5. The method of claim 4, wherein, in response to the configuration information indicating that the network is configured with the first initial uplink BWP and the second initial uplink BWP, determining that the resource position of the physical layer channel used by the first type of terminal is within the second initial uplink BWP comprises:
determining that the resource position of the physical layer channel used by the first type of terminal is within the second initial uplink BWP in response to the configuration information indicating that the network is configured with the first initial uplink BWP and the second initial uplink BWP, and the configuration information indicating that the resource position of the physical layer channel is within the first initial uplink BWP and the second initial uplink BWP.

6. The method of claim 4, wherein, in response to the configuration information indicating that the network is configured with the first initial uplink BWP and the second initial uplink BWP, determining that the resource position of the physical layer channel used by the first type of terminal is within the first initial uplink BWP comprises:
determining that the resource position of the physical layer channel used by the first type of terminal is within the first initial uplink BWP in response to the configuration information indicating that the network is configured with the first initial uplink BWP and the second initial uplink BWP, and the configuration information indicating that the resource position of the physical layer channel is within the first initial uplink BWP and not within the second initial uplink BWP.

7. The method of claim 4, further comprising:
monitoring the second initial uplink BWP in response to determining that the resource position of the physical layer channel used by the first type of terminal is within the first initial uplink BWP and that the first type of terminal performs random access; or
monitoring the first initial uplink BWP in response to determining that the resource position of the physical layer channel used by the first type of terminal is within the first initial uplink BWP and that the first type of terminal performs random access; or
monitoring the first initial uplink BWP and the second initial uplink BWP in response to determining that resource position of the physical layer channel used by the first type of terminal is within the first initial uplink BWP and the second initial uplink BWP and that the first type of terminal performs random access.

8. The method of claim 1, wherein, in response to the configuration information indicating that the resource position of the physical layer channel used by the first type of terminal is within the first initial uplink BWP and the second initial uplink BWP, the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; or
total frequency resources occupied by the first initial uplink BWP and the second initial uplink BWP being within a bandwidth range supported by the first type of terminal.

9. The method of claim 1, further comprising:
receiving the configuration information sent by a base station.

10. A method for determining a resource position of a channel, performed by a base station, comprising:
sending configuration information of an initial uplink bandwidth part (BWP) to a first type of terminal,
wherein the initial uplink BWP comprises a first initial uplink BWP and/or a second initial uplink BWP; and the configuration information indicates whether the second initial uplink BWP is configured and/or a mapping relationship between the physical layer channel and the initial uplink BWP.

11. The method of claim 10, wherein
the first initial uplink BWP is a BWP for a second type of terminal to use, or the first initial uplink BWP is a BWP for the first type of terminal and the second type of terminal to use; and
the second initial uplink BWP is a BWP for the first type of terminal to use.

12. The method of claim 10, wherein the physical layer channel comprises one or more of:
a physical random access channel (PRACH), a physical uplink shared channel (PUSCH), and a physical uplink control channel (PUCCH).

13. The method of claim 11, wherein the configuration information indicates that a network is configured with the first initial uplink BWP and the second initial uplink BWP.

14. The method of claim 11, wherein the configuration information indicates that a network is configured with the first initial uplink BWP and the second initial uplink BWP, and the configuration information indicates that the resource position of the physical layer channel is within the first initial uplink BWP and the second initial uplink BWP.

15. The method of claim 11, wherein the configuration information indicates that a network is configured with the first initial uplink BWP and the second initial uplink BWP, and the configuration information indicates that the resource position of the physical layer channel is within the first initial uplink BWP and not within the second initial uplink BWP.

16. The method of claim 10, wherein the configuration information indicates that the resource position of the physical layer channel used by the first type of terminal is within the first initial uplink BWP and the second initial uplink BWP, and the first initial uplink BWP and the second initial uplink BWP meet one or more of following constraint conditions:
a subcarrier spacing of the first initial uplink BWP being the same as a subcarrier spacing of the second initial uplink BWP;
the first initial uplink BWP containing the second initial uplink BWP;
the second initial uplink BWP containing the first initial uplink BWP; or
total frequency resources occupied by the first initial uplink BWP and the second initial uplink BWP being within a bandwidth range supported by the first type of terminal.

17. An apparatus for determining a resource position of a channel, comprising:
a determining module, configured to determine, based on configuration information of an initial uplink bandwidth part (BWP), a resource position of a physical layer channel used by a first type of terminal,
wherein the initial uplink BWP comprises a first initial uplink BWP and/or a second initial uplink BWP; and the configuration information indicates whether the second initial uplink BWP is configured and/or a mapping relationship between the physical layer channel and the initial uplink BWP.

18. An apparatus for determining a resource position of a channel, comprising:
a sending module, configured to send configuration information of an initial uplink bandwidth part (BWP) to a first type of terminal,
wherein the initial uplink BWP comprises a first initial uplink BWP and/or a second initial uplink BWP; and the configuration information indicates whether the second initial uplink BWP is configured and/or a mapping relationship between the physical layer channel and the initial uplink BWP.

19. A communication device, comprising:
a memory; and
a processor, coupled to the memory, and configured to execute computer executable instructions stored in the memory to implement the method according to any of claims 1 to 9.

20. A computer storage medium having computer executable instructions stored thereon that, when executed by a processor, the method according to any of claims 1 to 9 is performed.
